(19) Europäisches Patentamt
European Patent Office
Office européen des brevets

(11) **EP 2 212 129 B1**

(12) **EUROPÄISCHE PATENTSCHRIFT**

(45) Veröffentlichungstag und Bekanntmachung des Hinweises auf die Patenterteilung:
**06.11.2013   Patentblatt 2013/45**

(21) Anmeldenummer: **08802530.9**

(22) Anmeldetag: **23.09.2008**

(51) Int Cl.:
**B60G 7/00** (2006.01)    **B60G 17/015** (2006.01)
**B62D 17/00** (2006.01)

(86) Internationale Anmeldenummer:
**PCT/EP2008/008040**

(87) Internationale Veröffentlichungsnummer:
**WO 2009/052914 (30.04.2009 Gazette 2009/18)**

(54) **RADAUFHÄNGUNG FÜR KRAFTFAHRZEUGE**

WHEEL SUSPENSION SYSTEM FOR MOTOR VEHICLES

SUSPENSION POUR VÉHICULES AUTOMOBILES

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **24.10.2007   DE 102007050795**
**27.02.2008   DE 102008011367**

(43) Veröffentlichungstag der Anmeldung:
**04.08.2010   Patentblatt 2010/31**

(73) Patentinhaber: **Audi AG**
**85045 Ingolstadt (DE)**

(72) Erfinder:
• **MEITINGER, Karl-Heinz**
**81667 München (DE)**
• **KUNSCH, Peter**
**85123 Karlskron (DE)**
• **MICHEL, Wilfried**
**93339 Riedenburg (DE)**
• **MÜLLER, Hugo**
**86701 Rohrenfels-Ballersdorf (DE)**
• **SCHMID, Wolfgang**
**85354 Freising (DE)**
• **KOSSIRA, Christoph**
**85053 Ingolstadt (DE)**

(74) Vertreter: **Asch, Konrad**
**Audi AG**
**Patentabteilung**
**85045 Ingolstadt (DE)**

(56) Entgegenhaltungen:
WO-A-98/16418         WO-A-2007/118629
DE-A1- 3 928 135      FR-A- 2 833 233
US-A1- 2002 036 385

**Beschreibung**

Die Erfindung betrifft eine Radaufhängung für Kraftfahrzeuge nach dem Oberbegriff des Patentanspruches 1.

Bei aktiven Lenksystemen, insbesondere für die Hinterachse von Fahrzeugen kann der Radsturz bzw. die Radspur über ein Stellglied eingestellt werden, so dass durch Steuerung des Stellglieds aktiv auf das Fahrverhalten des Kraftfahrzeugs Einfluss genommen werden kann.

Aus der DE 39 28 135 A1 ist eine gattungsgemäße Radaufhängung für Kraftfahrzeuge bekannt. Der Radträger der Radaufhängung weist ein radseitiges, das Fahrzeugrad drehbar lagerndes Tragelement sowie ein achsseitiges Tragelement auf, zwischen denen ein Stellglied geschaltet ist. Das Stellglied ist hier ein hydraulischer Stellzylinder, der einerseits an einer Lagerkonsole des Radträgers abgestützt ist und andererseits mit seiner Kolbenstange gegen einen äußeren Wälzlager-Laufring eines Radlagers drückt, wodurch das Radlager zusammen mit dem Fahrzeugrad eine Schwenkbewegung um einen zentralen Gelenkmittelpunkt ausführt, um einen Vor- bzw. Nachspurwinkel oder einen Sturzwinkel des betreffenden Fahrzeugrades zu ändern.

Die aus der DE 39 28 135 A1 bekannte Anordnung des Stellglieds zwischen der Lagerkonsole und dem Radlager ist bauraumintensiv und konstruktiv aufwendig mit entsprechend hohem Gewicht gestaltet. Das insgesamt hohe Gewicht der Radaufhängung ist besonders nachteilig, da es sich beim Radträger um eine ungefederte Masse handelt.

Zum technischen Umfeld wird weiterhin auf die WO 98/16418 A verwiesen.

Die Aufgabe der Erfindung besteht darin, eine Radaufhängung mit einem aktiven Lenksystem bereitzustellen, das konstruktiv einfach und bauraumgünstig in der Radaufhängung angeordnet ist.

Die Aufgabe ist durch die Merkmale des Patentanspruches 1 gelöst. Vorteilhafte Weiterbildungen der Erfindung sind in den Unteransprüchen offenbart.

Gemäß dem kennzeichnenden Teil des Patentanspruches 1 weist das Stellglied ein radseitiges Drehteil und ein achsseitiges Drehteil auf, die zwischen dem radseitigen Tragelement und dem achsseitigen Tragelement angeordnet sind und um ihre Drehachsen zueinander verdrehbar sind. Dabei kann das radseitige Drehteil durch Verdrehen der beiden Drehteile zueinander um einen Schwenkwinkel gegenüber dem achsseitigen Drehteil ausgelenkt werden. Entsprechend wird daher auch das am radseitigen Tragelement vorgesehene Fahrzeugrad um einen Spur- und/oder Sturzwinkel verschwenkt. Im Unterschied zum Stand der Technik erfolgt daher eine Winkelverstellung des radseitigen Tragelements durch eine Drehbetätigung eines der Drehteile bzw. der beiden Drehteile des Stellglieds, und nicht durch eine Linear-Hubbewegung eines hydraulischen Stellzylinders, der gegen das radseitige Lagerelement drückt. Die Winkelverstellung kann durch gegensinnige oder gleichsinnige Drehbetätigung beider Drehteile bzw. auch durch Drehung eines der beiden Drehteile erfolgen, während das andere Drehteil nicht um seine Achse rotiert.

Erfindungsgemäß ist die Drehachse des radseitigen Drehteils um einen Winkel gegenüber der Drehachse des achsseitigen Drehteils schräggestellt und kann das radseitige Drehteil mit seiner Mittelachse nach Art einer Taumelbewegung um seine Drehachse bewegt werden. Bei der Taumelbewegung des radseitigen Drehteiles können die beiden Drehteile über Steuerflächen in Anlage, vorzugsweise in Gleitkontakt und/oder in Wälzkontakt (Wälzlager), sein, die wiederum in einer Drehebene liegen. Die Drehebene ist dabei senkrecht zur Drehachse des radseitigen Drehteils ausgerichtet. Auf diese Weise kann sich das radseitige Drehteil mit zugehörigem radseitigen Tragelement für das Fahrzeugrad in einer Taumelbewegung um seine Drehachse bewegen. Dabei ändert sich der Schwenkwinkel zwischen dem radseitigen Drehteil und dem achsseitigen Drehteil in Abhängigkeit von dem Drehwinkel des radseitigen Drehteils.

Die beiden Drehteile des Stellglieds sind erfindungsgemäß über Drehlager an den jeweiligen Tragelementen drehbar gelagert sein. Auf diese Weise kann eine Verdrehung der beiden Drehteile zueinander stattfinden, ohne dass ein Drehmoment auf die Tragelemente übertragen wird.

Bauraumtechnisch bevorzugt ist es, wenn die beiden Drehteile als Hohlzylinder ausgebildet sind. Der zylindrische Innenraum der Hohlzylinder kann daher als Bauraum für einen Stellantrieb, Gelenkwellen bzw. Gleichlaufwellen verwendet werden. In Abhängigkeit vom vorhandenen Bauraum kann der Stellantrieb auch außerhalb der Drehteile vorgesehen und trieblich mit den Drehteilen verbunden sein. Alternativ zur hohlzylindrischen Ausbildung können die Drehteile auch aus Vollmaterial und/oder in beliebiger Form hergestellt sein.

Durch eine Drehung des radseitigen Drehteils gegenüber dem achsseitigen Drehteil kann somit der Schwenkwinkel zwischen den beiden Drehteilen eingestellt werden. Der maximal einstellbare Schwenkwinkel ist dabei aus geometrischen Gründen das Zweifache des zwischen den beiden Drehachsen eingeschlossenen Neigungswinkels.

Durch eine gleichzeitig oder zeitlich versetzt erfolgende Drehung des achsseitigen Drehteils gegenüber dem achsseitigen Tragelement kann die räumliche Ausrichtung der von den beiden Drehteilen gebildeten Winkelanördnung verändert werden.

Als Stellantrieb für die beiden Drehteile ist insbesondere ein Drehmotor geeignet, der jeweils in kompakter Bauweise innerhalb der hohlzylindrischen Drehteile platzsparend angeordnet sein kann. Alternativ kann der Stellantrieb, wie bereits erwähnt, auch außerhalb oder in Kombination sowohl außen- als auch innenseitig angeordnet sein.

Die Stellantriebe für die beiden Drehteile können in einer Steuerstrecke bzw. einem Regelkreis mit Regelungseinrichtung eingebunden sein, die auf der Grundlage eines einzustellenden Soll-Spurwinkels bzw. Soll-Sturzwinkels die Drehwinkel der beiden Drehteile festlegt. Für einen geschlossen Regelkreis können den beiden Drehteilen Winkelgeber zugeordnet sein, die einen Drehwinkel-Ist-Wert der beiden Drehteile erfasst und an die Steuereinrichtung rückführt. Die Erfindung ist bei sämtlichen Regelstrategien mit Bezug auf die Fahrdynamik, den Fahrkomfort, auf Sicherheitseinstellungen oder auf die Grundauslegung des Fahrzeugs anwendbar.

Für eine in Fahrzeugquerrichtung kompakte Bauweise der Radaufhängung können die beiden Drehteile ineinander verschachtelt angeordnet sein. Bevorzugt kann eines der beiden Drehteile, etwa das radseitige Drehteil, als ein topfförmiges Hohlprofilteil ausgeführt sein, in dem das achsseitige Drehteil vorgesehen ist. Der Boden des topfförmigen Drehteils kann in diesem Fall als oben beschriebene Steuerfläche gestaltet sein, die mit der Steuerfläche des achsseitigen Drehteils in Anlage ist.

Zusätzlich kann auch zumindest eines der Tragelemente als topfförmiges Hohlprofilteil mit einer Umfangswand ausgeführt sein, die einen Montageraum begrenzt, in dem das erfindungsgemäße Stellglied angeordnet ist. Für eine stabile Drehlagerung können die Drehteile an der Umfangswand des topfförmigen Tragelements abgestützt sein. Bei der oben beschriebenen ineinander verschachtelten Drehteil-Anordnung kann dabei lediglich das radial äußere Drehteil an der Umfangswand des topfförmigen Tragelements abgestützt sein.

Gemäß einer weiteren Ausführungsform kann zwischen dem radseitigen Tragelement und dem achsseitigen Tragelement ein zusätzliches Kupplungselement geschaltet sein, über das ein Drehmoment, etwa ein Bremsmoment, vom radseitigen Radelement auf das achsseitige Tragelement, und damit zum Fahrzeugaufbau, übertragen werden kann. Dieser Ausgestaltung der Erfindung liegt die Problematik zugrunde, dass sowohl das radseitige Drehteil als auch das achsseitige Drehteil relativ zueinander sowie mit Bezug auf die Tragelemente verdrehbar sind. Im ungünstigen Fall kann daher beispielsweise ein Bremsmoment ausgehend vom radseitigen Tragelement - aufgrund des Drehfreiheitsgrades zwischen den Drehteilen - nicht exakt auf das achsseitige Tragelement bzw. auf den Fahrzeugaufbau übertragen werden. Mit dem zusätzlichen Kupplungselement wird ein weiterer Kräfte- und Momentenpfad bereitgestellt, über den das Bremsmoment zuverlässig auf den Fahrzeugaufbau übertragen werden kann.

Das Kupplungselement ist vorzugsweise vollständig entkoppelt vom, zwischen den Tragelementen geschalteten Stellglied bzw. den Drehteilen des Radträgers. Auf diese Weise wird weder das Kupplungselement noch das Stellglied vom jeweils anderen Bauteil funktionell beeinflusst.

Das Kupplungselement kann bevorzugt verdrehsteif bzw. torsionssteif sein, um die Drehmomentübertragung zu gewährleisten. Außerdem kann das Kupplungselement ausreichend elastisch und/oder nachgiebig gestaltet sein, um eine Auslenkung des radseitigen Drehteils gegenüber dem achsseitigen Drehteil ausgleichen zu können.

In einer bevorzugten Ausführungsform ist das Kupplungselement als ein Metallbalg realisiert, der sowohl am radseitigen als auch am achsseitigen Tragelement etwa über Befestigungsschrauben montiert ist. In dem vom Metallbalg begrenzten Montageraum können die Drehteile Stellglieds verschmutzungssicher angeordnet sein. Die Drehteile können dabei über einen freien Radialabstand vom Metallbalg beabstandet sein.

Wie oben bereits erwähnt, können die beiden Drehteile als Hohlzylinder ausgebildet sein. Deren zylindrischer Innenraum kann als Bauraum für die Stellantriebe dienen. Alternativ kann durch den Innenraum der Drehteile auch eine Gelenkwelle zum Antrieb des Fahrzeugrades geführt werden.

Die Anordnung der Stellantriebe innerhalb der hohlzylindrischen Drehteile ist insbesondere bevorzugt, wenn das Fahrzeugrad geschleppt wird, also nicht durch eine Gelenkwelle angetrieben wird. In diesem Fall ist der Hohlraum der Drehteile leer. Es können daher ohne weiteres die Stellantriebe darin vorgesehen werden.

Bei Verwendung einer, durch den Hohlraum der Drehteile geführten Gelenkwelle kann es aufgrund des begrenzten Bauraums erforderlich sein, die Stellantriebe außerhalb der beiden hohlzylindrischen Drehteile anzuordnen. In diesem Fall kann an jedem der Drehteile außenumfangsseitig jeweils eine Getriebestufe, etwa eine Stirnradstufe oder dergleichen, vorgesehen sein. Die damit trieblich verbundenen Stellantriebe können bauraumgünstig außerhalb des Radträgers in dafür vorgesehenen Freiräumen integrierbar sein.

Eine solche Anordnung der Getriebestufen sowie der zugehörigen Stellantriebe außerhalb der Drehteile ist jedoch hinsichtlich der Verwendung eines Metallbalges als Kupplungselement problematisch. Die jeweilige Getriebestufe bzw. der zugehörige Stellantrieb müsste nämlich durch den Metallbalg hindurch geführt werden, wodurch die Funktionsfähigkeit des Metallbalges reduziert wird. Wird nämlich eine solche Getriebedurchführung in den Metallbalg integriert, so sinkt das vom Metallbalg übertragbare Drehmoment aufgrund des Flächenträgheitsmomentes an dieser Stelle. Zum Ausgleich müsste der Durchmesser des Metallbalges stark erhöht werden.

Alternativ zum Metallbalg kann daher als Kupplungselement ein Kardangelenk eingesetzt werden, das zwischen das radseitige und das achsseitige Tragelement geschaltet ist. Für eine bauraumreduzierte Ausführung kann das Kardangelenk ein, bevorzugt radial außerhalb der Drehteile angeordnetes Gelenkteil, etwa ein Ringelement, aufweisen, das sich mit einem Radialabstand um die Drehteile erstreckt. Außerdem kann das Kardangelenk mit den Tragelementen verbundene Stege aufweisen, die nach Art einer Gelenkgabel wiederum über Drehachsen gelenkig am Ringelement angelenkt sind. Auf diese Weise erfolgt mittels des Kardangelenkes eine torsionsteife sowie spielfreie Drehmomentübertragung zwischen den beiden Tragelementen des Radträgers.

Im Unterscheid zum Metallbalg kann das Kardangelenk gänzlich ohne elastische Rückstellkräfte und damit insgesamt leichtgängiger als der Metallbalg eine Auslenkung des radseitigen Drehteils um einen vorgegebenen Schwenkwinkel gegenüber dem achsseitigen Drehteil ausgleichen.

Bevorzugt sind die oben genannten radseitigen und achsseitigen Stege unter Bildung von Freiräumen zueinander winkelversetzt angeordnet. In diese Freiräume kann bauraumgünstig jeweils zumindest teilweise ein Stellantrieb angeordnet oder alternativ die außenseitig am Drehteil angeordnete Getriebestufe vorgesehen werden.

Die Mitte des Kardangelenkes liegt gemäß einer Ausführung der Erfindung auf Höhe des Momentanpols des Radträgers, wodurch bei einer Verstellung des Radträgers keine Längenänderung auftritt.

Sowohl der Metallbalg als auch das Kardangelenk kann auftretende Bremsmomente aufnehmen. Dadurch wird die mittels der Drehteile bereitgestellte Aktorik nicht durch Bremsmomente beansprucht.

Durch Auswahl einer geeigneten Getriebestufe bzw. Stirnradstufe können die Stellantriebe auch in Winkel zur Mittenachse des Stellgliedes angestellt werden. Für den Fall, dass die Achsabstände zwischen Stellantrieb und Drehteil zu groß sind, so dass auch die Stirnradverzahnung zu groß werden sollte, kann z. B. auch ein Zahnriementrieb verwendet werden.

Nachfolgend sind fünf Ausführungsbeispiele der Erfindung anhand der beigefügten Figuren beschrieben.

Es zeigen:

Fig. 1 in einer schematischen Prinzipdarstellung eine Radaufhängung an einer Fahrzeughinterachse gemäß dem ersten Ausführungsbeispiel;

Fig. 2 in einer vergrößerten schematischen Teilschnittansicht den Radträger in Alleinstellung;

Fig. 3 und 4 jeweils Ansichten des Radträgers, die Schwenkbewegungen der beiden Drehteile zur Einstellung des Spur- oder Sturzwinkels veranschaulichen;

Fig. 5 den Radträger gemäß dem zweiten Ausführungsbeispiel in Alleinstellung;

Fig. 6 den Radträger gemäß dem dritten Ausführungsbeispiel mit einem integrierten Metallbalg;

Fig. 7 den Radträger gemäß dem vierten Ausführungsbeispiel mit integriertem Kardangelenk; und

Fig. 8 den Radträger gemäß dem fünften Ausführungsbeispiel.

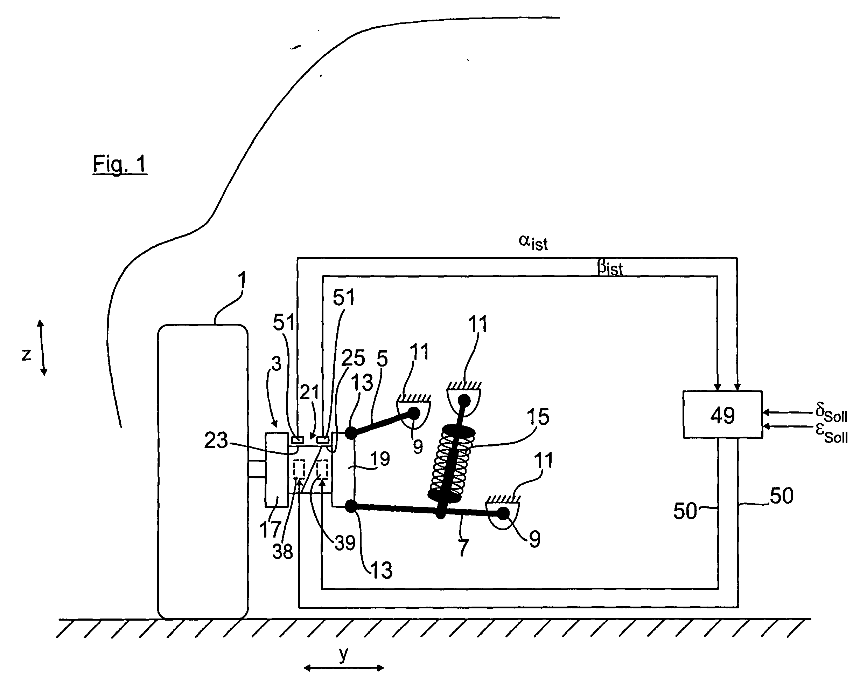

In der **Fig. 1** ist eine Radaufhängung in Verbindung mit einer bekannten Querlenkerachse dargestellt, bei welcher ein das Fahrzeugrad 1 tragender Radträger 3 unter anderem mit Hilfe eines oberen Querlenkers 5 und eines unteren Querlenkers 7 über aufbauseitige Lenkerlager 9 schwenkbar am Fahrzeugaufbau 11 angebunden sind. Die aufbauseitigen Lenkerlager 9 sowie die radträgerseitigen Lenkerlager 13 sind von üblichem Aufbau. Zwischen dem unteren Querlenker 7 und dem Fahrzeugaufbau 11 ist außerdem in üblicher Weise eine Tragfeder 15 mit zugeordnetem Federbein abgestützt.

Abweichend von der gezeigten Querlenkerachse kann der Radträger 3 mit jeder beliebigen Achse kombiniert werden, etwa einer Starrachse, einer Verbundlenkerachse, einer Mehrlenkerachse, etc.

Gemäß der **Fig. 1** weist der Radträger 3 ein radseitiges Tragelement 17 sowie ein achsseitiges Tragelement 19 auf. Am radseitigen Tragelement 17 ist das Fahrzeugrad 1 über eine Radnabe in einem nicht dargestellten Radlager des radseitigen Tragelements 17 gelagert. Außerdem kann am radseitigen Tragelement 17 die Bremsanlage in üblicher Weise angebracht sein. Am achsseitigen Tragelement 19 sind die beiden Querlenker 5, 7 über die Lenkerlager 13 angebunden.

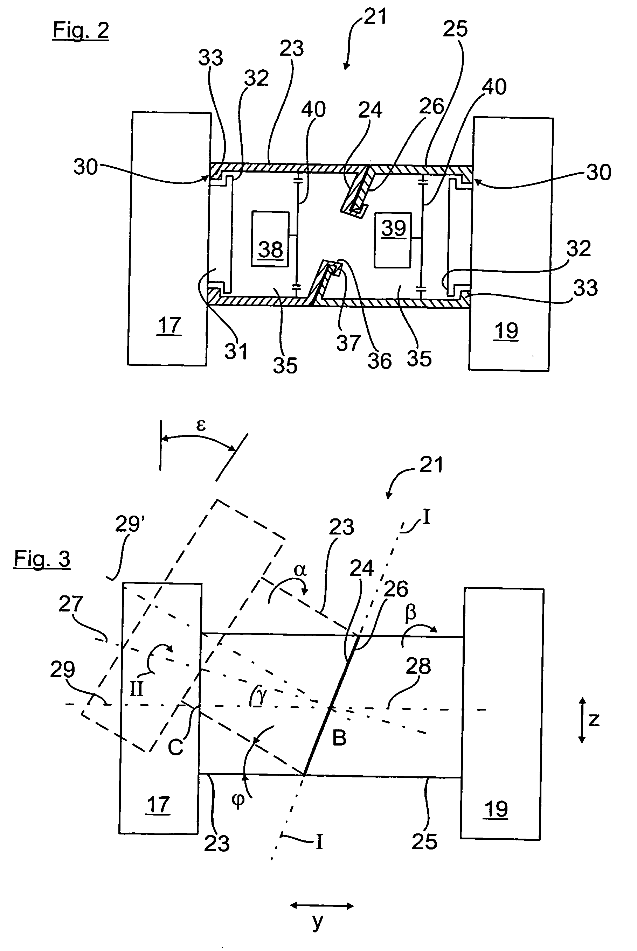

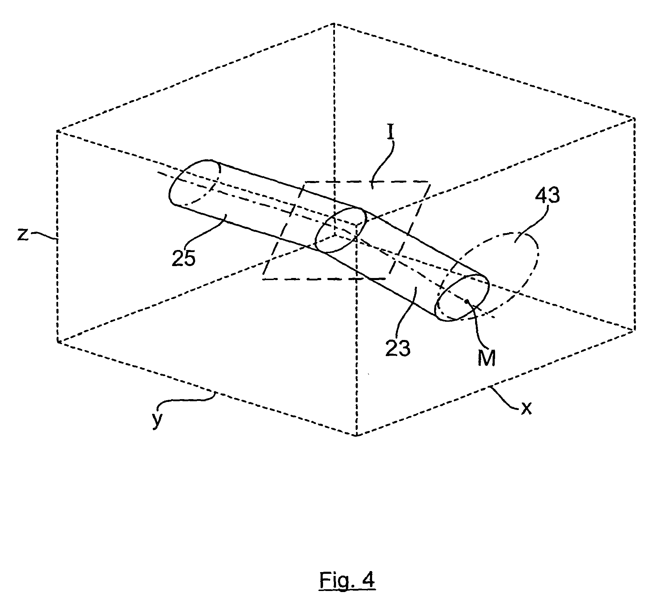

Zwischen den beiden Tragelementen 17, 19 ist ein Stellglied 21 vorgesehen, das ein radseitiges Drehteil 23 und ein achsseitiges Drehteil 25 aufweist. Wie aus der **Fig. 2 oder 3** hervorgeht, sind die beiden Drehteile 23 und 25 über schräggestellte Steuerflächen 24, 26 miteinander in Anlage. Die beiden Steuerflächen 24, 26 liegen somit in einer, in den **Fig. 3 und 4** angedeuteten Drehebene I, in der sie in Gleitkontakt aufeinander verschiebbar sind. Anstelle des gezeigten Gleitkontakts ist ebenso eine Wälzlagerung zwischen den Drehteilen möglich.

Die Drehteile 23, 25 sind jeweils um ihre Drehachsen 27, 28 drehbar zwischen den beiden Tragelementen 17, 19 gelagert. Die Drehachse 28 des Drehteils 25 ist in Fahrzeugquerrichtung y axial ausgerichtet sowie koaxial zur Mittelachse 29 des Drehteils 23. Die Drehachse 27 des Drehteils 23 ist um einen Neigungswinkel $\gamma$ nach oben geneigt. Bei einer Drehung um einen Drehwinkel $\alpha$ bewegt sich daher das Drehteil 23 mit seiner Mittelachse 29 in einer Taumelbewegung II mit veränderlichem Schwenkwinkel $\varphi$ um die Drehachse 27. Alternativ ist auch eine windschiefe Ausrichtung beider Drehachsen 27, 28 möglich. Der Drehwinkel $\alpha$ beschreibt einen Drehwinkelversatz zwischen dem Drehteil 23 und dem Drehteil 25.

In der **Fig. 3** ist das Drehteil 23 in seiner Ausgangslage bei einem Drehwinkel $\alpha=0$ gezeigt, in der die Mittelachse 29 des Drehteils 23 koaxial zur Drehachse 28 des Drehteils 25 ausgerichtet ist. In diesem Fall liegt der Sturzwinkel ε in der dargestellten yz-Ebene des Fahrzeugrads 1 bei 0.

Außerdem ist in der **Fig. 3** in gestrichelten Linien das Drehteil 23 beispielhaft in einer Drehlage bei einem Drehwinkel α=180° gezeigt. In dieser Drehlage ist das Drehteil 23 mit seiner Mittelachse 29' in der Taumelbewegung II um die Drehachse 27 nach oben bewegt. Dadurch ergibt sich ein Schwenkwinkel φ zwischen den beiden Drehteilen 23 und 25. Der Schwenkwinkel φ hat bei dem gezeigten Drehwinkel α von 180° seinen Maximalwert. Entsprechend ist auch das Fahrzeugrad 1 bzw. das radseitige Tragelement 17 um den Sturzwinkel ε in der yz-Ebene geschwenkt.

Gleichzeitig mit der Drehung des Drehteils 23 oder zeitlich versetzt dazu kann das Drehteil 25 um einen Drehwinkel β gegenüber dem achsseitigen Tragelement 19 gedreht werden.

Dadurch wird das in der **Fig. 3** gezeigte, gegenüber dem achsseitigen Drehteil 25 abgewinkelte Drehteil 23 aus der yz-Ebene heraus geschwenkt, wodurch der Spurwinkel δ des Fahrzeugrads 1 einstellbar ist. Bei einer beispielhaften Drehung des abgewinkelten Drehteils 23 um einen Drehwinkel β von 90° in der xy-Ebene würde somit der Spurwinkel δ dem Schwenkwinkel φ entsprechen, und der Sturzwinkel ε auf 0 reduziert sein.

Durch eine kombinierte Verdrehung der Drehteile 23, 25 um die Drehwinkel α, β kann somit eine kombinierte Sturz- und Spurverstellung realisiert werden. Dabei ist jede beliebige Kombination aus Spurwinkel δ und Sturzwinkel ε darstellbar, solange ein maximaler Schwenkwinkel $\varphi_{max}=2\gamma$ nicht überschritten wird, und die Gleichung

$$\sin^2 \delta + \sin^2 \varepsilon \leq \sin^2 \varphi_{max}$$

eingehalten ist.

Der zwischen den beiden Drehachsen 27 und 28 eingeschlossene Neigungswinkel γ ist in den Figuren zum leichteren Verständnis übertrieben groß dargestellt. Tatsächlich bewegt sich der Neigungswinkel in einer Größenordnung von 2° bis 5°. In Abhängigkeit von der jeweiligen Anwendung kann der Neigungswinkel auch außerhalb dieses Winkelbereiches liegen. Anwendungsbedingt sind auch Neigungswinkel in einer Größenordnung von 45° denkbar.

Bei beliebigen Kombinationen von Spurwinkel δ und Sturzwinkel ε bewegt sich der in den **Fig. 3 und 4** an der freien Stirnseite des radseitigen Drehteils 23 dargestellte Mittelpunkt M in einem Kugeloberflächen-Ausschnitt 43 das im Koordinatensystem der **Fig. 4** durch eine strichpunktierte Kreislinie begrenzt ist.

In der **Fig. 2** ist grob schematisch und lediglich beispielhaft die Lagerung sowie der Stellantrieb der beiden Drehteile 23, 25 zwischen den Tragelementen 17, 19 des Radträgers 3 gezeigt. So sind die Drehteile 23, 25 über Drehlager 30 mit den Tragelementen 17, 19 in Verbindung. Die Drehlager 30 weisen jeweils einen vom Tragelement 17, 19 ragenden Achsvorsprung 31 auf, der in das hohlzylindrisch gebildete Drehteil 23, 25 einragt. Jeder Achsvorsprung 31 hintergreift dabei mit einem in Radialrichtung ausgeweiteten Flansch 32 einen stirnseitigen Ringbund 33 des jeweiligen Drehteils 23, 25. Die beiden Drehteile 23, 25 sind dabei mit ihrem Ringbund 33 drehbar zwischen dem Flansch 32 und dem jeweiligen Tragelement 17, 19 angeordnet. An den zueinander in Anlage befindlichen Steuerflächen 25, 26 sind einander gegenüberliegende Montageöffnungen vorgesehen. Diese verbinden die beiden zylindrischen Innenräume 35 der Drehteile 23, 25 miteinander.

Wie oben erwähnt, sind die beiden Steuerflächen 24, 26 zueinander in Gleitkontakt und beim Verdrehen der beiden Drehteile aneinander verschiebbar. Zur Kopplung der beiden Drehteile 23, 25 ist gemäß der Fig. 2 die Steuerfläche 24 des radseitigen Drehteils 23 mit einem im Querschnitt hakenförmigen, umlaufenden Flansch 36 ausgebildet. Der Flansch 36 ragt durch die Montageöffnung der gegenüberliegenden Steuerfläche 26 des achsseitigen Drehteils 25 und hintergreift mit einem Schenkel 37 die Steuerfläche 26 das Drehteil 25.

In den Hohlräumen 35 der beiden Drehteile 23, 25 sind Drehmotoren 38, 39 angeordnet, die über einen Getriebezug 40 mit einer Innenverzahnung des jeweiligen Drehteils 23, 25 kämmen.

Zur aktiven Spur- und Sturzverstellung werden gemäß der **Fig. 1** von einem nicht dargestellten übergeordneten Steuergerät auf der Grundlage unterschiedlicher Fahrzeugparameter die Soll-Werte $\delta_{soll}$ und $\varepsilon_{soll}$ für die Spur- und Sturzwinkel berechnet und zu einer Regelungseinrichtung 49 geleitet. Die Regelungseinrichtung 49 ist über Signalleitungen 50 mit den Drehmotoren 38, 39 der beiden Drehteile 23, 25 ansteuerbar, die die jeweiligen Drehteile 23, 25 über einen Drehwinkel α oder einen Drehwinkel β drehen. Wie in der **Fig. 1** angedeutet, sind beiden Drehteilen 23, 25 Winkelgeber 51 zugeordnet, die jeweils einen Ist-Wert $\alpha_{ist}$ und $\beta_{ist}$ der beiden Drehteile 23, 25 erfassen und zur die Regelungseinrichtung 49 rückführen.

Bei der nachfolgenden Berechnung wird der Drehwinkel α als Drehwinkelversatz zwischen dem Drehteil 23 und dem Drehteil 25 sowie der Drehwinkel β als Drehwinkelversatz zwischen dem achsseitigen Tragelement 19 und dem Drehteil 25 zugrunde gelegt.

Die Drehwinkel α und β für die Drehmotoren 38, 39 der beiden Drehteile 23, 25 werden mittels eines Bewegungsalgorithmus in der Regelungseinrichtung 49 berechnet. Ausgangspunkt für den Bewegungsalgorithmus ist die Bewegung des in der **Fig. 4** gezeigten stirnseitigen Mittelpunktes M des Drehteils 23. Die Koordinaten x, y, z des Mittelpunktes M in dem Koordinatensystem berechnen sich beispielsweise mit folgenden Formeln (Vorwärtsrechnung):

$$x = -r \cdot \cos\vartheta \cdot [\cos\beta \cdot \sin\vartheta \cdot (1 - \cos\alpha) + \sin\alpha \cdot \sin\beta]$$

$$y = r \cdot (\sin^2\vartheta + \cos^2\vartheta \cdot \cos\alpha)$$

$$z = r \cdot \cos\vartheta \cdot [\sin\beta \cdot \sin\vartheta \cdot (1 - \cos\alpha) - \sin\alpha \cdot \cos\beta]$$

wobei $\vartheta = 90° - \gamma$

Für eine gewünschte Kombination aus Spur- und Sturzwinkel $\delta$ und $\varepsilon$ sind die Drehwinkel $\alpha$ und $\beta$ beispielsweise mit folgenden Formeln zu berechnen (Rückwärtsrechnung):

$$\alpha = \pm\arccos \frac{y - r \cdot \sin^2\vartheta}{r \cdot \cos^2\vartheta}$$

$$\beta = \pm\arccos \frac{[-\cos\vartheta \cdot \sin\vartheta \cdot (1 - \cos\alpha)] \cdot x + (-\cos\vartheta \cdot \sin\alpha \cdot z)}{\sqrt{x^2 + z^2} \cdot \sqrt{[-\cos\vartheta \cdot \sin\vartheta \cdot (1 - \cos\alpha)]^2 + (-\cos\vartheta \cdot \sin\alpha)^2}}$$

mit

$$x = -r \cdot \cos(\varepsilon) \cdot \sin(\delta)$$

$$y = r \cdot \cos(\varepsilon) \cdot \cos(\delta)$$

$$z = r \cdot \sin(\varepsilon)$$

und

$r$ = Abstand zwischen den Punkten B und C aus der Fig. 3

Von den vier möglichen Lösungskombinationen für $\alpha$ und $\beta$ sind jeweils zwei Kombinationen gültig. Ausnahmen sind $\alpha$=180°, wo vier Kombinationen gültig sind und $\alpha$=0°, das identische x, y und z für alle Drehwinkel $\beta$ ergibt (unendliche Lösungsanzahl). Die Gültigkeit einer Kombination kann beispielsweise überprüft werden, indem mit den oben genannten Formeln für die Vorwärtsrechnung die x-, y- und z-Koordinaten ausgerechnet werden und mit den gegebenen x, y und z der Rückwärtsrechnung verglichen werden.

Bei einer Änderung von Spur- oder Sturz werden die gültigen Lösungskombinationen ausgerechnet und beispielsweise diejenige Lösung angefahren, bei der die Winkeländerungen für $\alpha$ und $\beta$ im Vergleich zu den aktuellen Winkel der Ist-Position möglichst gering sind.

In Abweichung zu den gezeigten Drehmotoren 38, 39 kann die Verdrehung der Drehteile 23 und 25 durch jede Aktorik erfolgen, welche eine Drehbewegung erzeugt. Dabei ist die Ausgangsposition der beiden Zylinder zueinander beliebig wählbar und nur abhängig von der aktuellen Spur- und Sturzwertvorgabe.

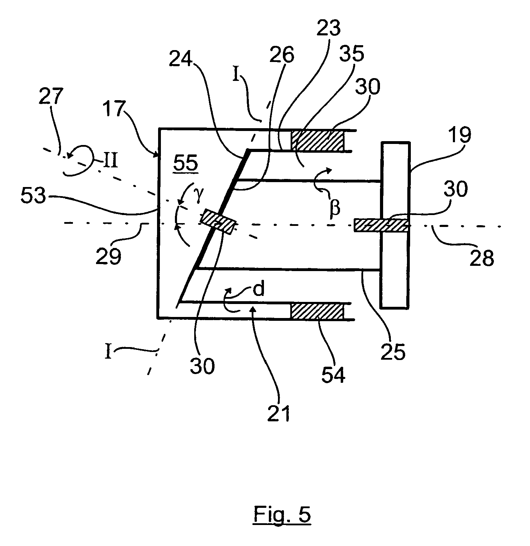

In der **Fig. 5** ist der Radträger 3 gemäß dem zweiten Ausführungsbeispiel schematisch gezeigt. Die Funktionsweise entspricht der des Radträgers 3 der **Fig. 1 bis 4,** so dass auf dessen Beschreibung verwiesen wird. Für einander entsprechende Bauteile werden identische Bezugsziffern verwendet.

Im Unterscheid zum ersten Ausführungsbeispiel sind die beiden Drehteile 23, 25 nicht axial hintereinander angeordnet, sondern sind die beiden Drehteile 23, 25 bauraumgünstig ineinander verschachtelt angeordnet. Das achsseitige Drehteil 25 ist hier im zylindrischen Hohlraum 35 des radseitigen Drehteils 23 angeordnet.

Wie im ersten Ausführungsbeispiel sind in der **Fig. 5** die beiden Drehteile 23, 25 über ihre schräggestellten Steuerflächen 24, 26 miteinander in Anlage, die wiederum in der Drehebene I liegen. Das radseitige Tragelement 17 ist hier nicht als Platte, sondern topfförmig mit einem radseitigen Tragelement-Boden 53 und einer hier beispielhaft zylindrischen Umfangswand 54 ausgebildet.

Das aus den beiden Drehteilen 23, 25 bestehende Stellglied 21 ist nahezu vollständig innerhalb des vom topfförmigen Tragelement 17 begrenzten Montageraums 55 angeordnet. Das Drehteil 23 ist dabei über das Drehlager 30 drehbar an der Umfangswand 54 des Tragelements 17 abgestützt. Aus dem Montageraum 55 des topfförmigen Tragelements 17 ragt lediglich das achsseitige Ende des Drehteils 25, das am achsseitigen Tragelement 19 drehgelagert ist.

Analog zum ersten Ausführungsbeispiel kann sich das Drehteil 23 mit seiner Mittelachse 29 in der Taumelbewegung II mit veränderlichem Schwenkwinkel φ um die Drehachse 27 drehen. Außerdem kann sich das Drehteil 25 um den Drehwinkel β gegenüber dem achsseitigen Tragelement 19 drehen.

Die beiden ersten Ausführungsbeispiele der Fig. 1 bis 5 sind auf die grundsätzliche Funktionsweise sowie den Regelalgorithmus ausgerichtet, auf dessen Grundlage die rad- und achsseitigen Drehteile 23, 25 zwischen dem radseitigen Tragelement 17 und dem achsseitigen Tragelement 19 zueinander verdrehbar sind.

Wie aus den Figuren 1 bis 5 der ersten beiden Ausführungsbeispiele weiter hervorgeht, sind die beiden Tragelemente 17 und 19 nicht drehfest zueinander angeordnet, sondern sind bei bestimmten Betriebs- bzw. Fahrzuständen die im folgenden nochmals beschriebenen Drehfreiheitsgrad zwischen den beiden Tragelementen 17 19 von Bedeutung: So kann gemäß der Fig. 2 einerseits der Drehmotor 38 über den Getriebezug 40 des Drehteil 23 sowohl gegenüber dem Drehteil 25 als auch gegenüber dem radseitigen Tragelement 19 drehen. Andererseits kann der Drehmotor 39 über den Getriebezug 40 das Drehteil 25 sowohl gegenüber dem Drehteil 23 als auch gegenüber dem achsseitigen Tragelement 19 drehen. Der Drehmotor 38 kann dabei mit dem radseitigen Tragelement 17 fest verbunden sein, während der Drehmotor 39 mit dem achsseitigen Tragelement 19 fest verbunden sein kann. Selbst bei blockierten Drehmotoren 38, 39 sind daher die beiden Drehteile 23, 25 über ihre Steuerflächen 24, 26 nicht drehfest verbunden.

Im ungünstigen Fall bestehen bei den in den Fig. 1 bis 5 gezeigten Anordnung somit die Gefahr, dass Momente vom radseitigen Tragelement 17 nicht auf das achsseitige Tragelement 19 übertragen werden, weil selbst bei blockierten Drehmotoren 38, 39 über die Steuerflächen 24, 26 der Drehteile 23, 25 durch den dazwischen vorhandenen Drehfreiheitsgrad keine Drehmomentübertragung möglich ist. Solche zu übertragende Drehmomente sind beispielsweise Bremsmomente oder Reaktionsmomente aus der Radaufstandskraft mit Hebelarm, der gewissermaßen aus den schräggestellten Wirkflächen resultiert.

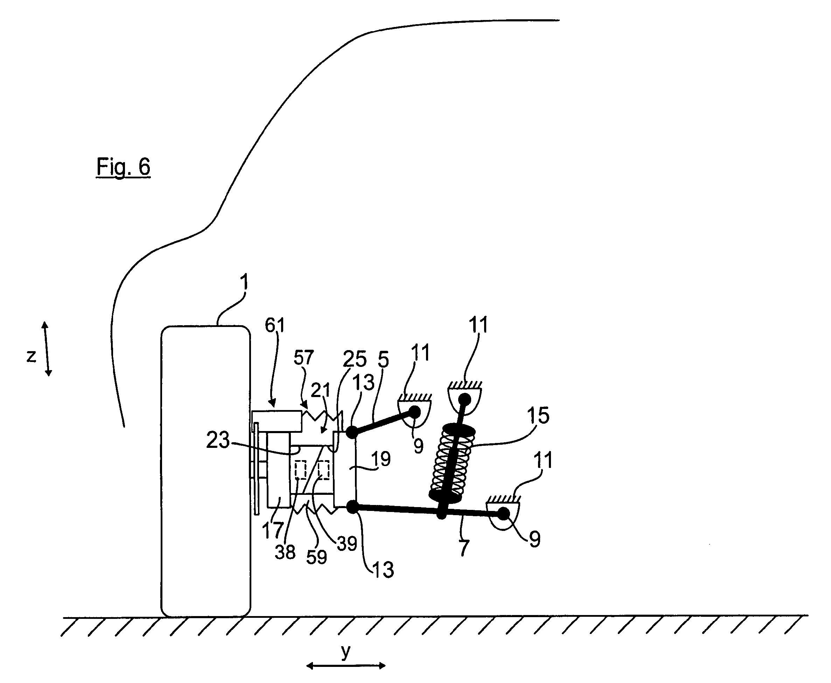

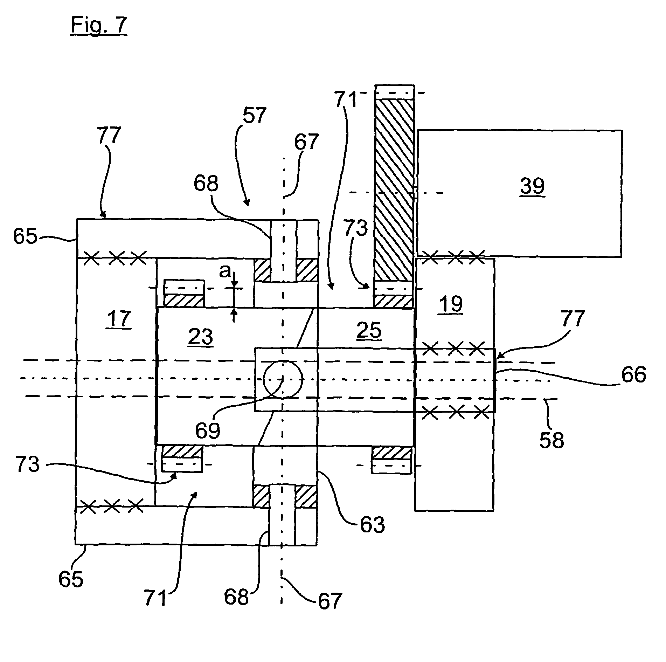

In den folgenden dritten und vierten Ausführungsbeispielen der Fig. 6 und 7 sind daher für eine Drehmomentübertragung vom radseitigen Tragelement 17 auf das achsseitige Tragelement 19 jeweils Kupplungselemente 57 zwischengeschaltet, die einerseits in deren Axialrichtung biegeweich und torsionssteif ausgeführt sind.

Das in der Fig. 6 gezeigte dritte Ausführungsbeispiel ist grundsätzlich funktions- und baugleich mit dem ersten Ausführungsbeispiel. Insofern wird auf dessen Beschreibung verwiesen. Im Unterschied zu den vorangegangenen Ausführungsbeispielen wird im Ausführungsbeispiel der Fig. 6 als Kupplungselement 57 ein Metallbalg eingesetzt. Metallbälge weisen bekanntermaßen eine hohe Verdrehsteifigkeit auf, so dass eine exakte Übertragung von Winkel- oder Drehmomenten gewährleistet ist, und zwar unabhängig von einem über die Drehteile 23, 25 führenden Übertragungsweg.

Der in der Fig. 6 gezeigte Metallbalg 57 ist an seinen Enden über nicht gezeigte Befestigungsschrauben jeweils fest am radseitigen Tragelement 17 und am achsseitigen Tragelement 19 montiert. Durch seinen ziehharmonikaartig geformten Zylindermantel ist der Metallbalg 57 in seiner Axialrichtung elastisch nachgiebig, so dass Winkel-Verlagerungen der beiden Drehteile 23, 25 über den Schwenkwinkel φ bei geringen Rückstellkräften ausgeglichen werden können.

Der Metallbalg 57 ist über einen freien Radialabstand von den Drehteilen 23, 25 beabstandet und begrenzt gemäß der Fig. 6 einen Montageraum 59, in dem die beiden Drehteile 23, 25, gegebenenfalls hermetisch nach außen abgedichtet, angeordnet sind.

Bei einem Bremsvorgang wird die in der Fig. 6 angedeutete, am radseitigen Tragelement 17 angebrachte Bremsanlage 61 aktiviert. Das dadurch erzeugte Bremsmoment wird hier nicht über die beiden Drehteile 23, 25 zum Fahrzeugaufbau geleitet, sondern über den Metallbalg 57, der eine spielfreie sowie torsionssteife Drehmomentübertragung des Bremsmomentes auf den Fahrzeugaufbau ermöglicht.

In der Fig. 7 ist das vierte Ausführungsbeispiel gezeigt, das vom grundsätzlichen Aufbau mit den vorangegangenen Ausführungsbeispielen übereinstimmt. Insofern wird auf deren Beschreibung Bezug genommen. Im Unterschied zu den vorangegangen Ausführungsbeispielen wird das am radseitigen Tragelement 17 gehalterte Fahrzeugrad 1 (in der Fig. 7 nicht gezeigt) nicht geschleppt, das heißt nicht durch eine Gelenkwelle angetrieben, sondern ist zusätzlich eine in der Fig. 7 gestrichelt angedeutete Gelenkwelle 58 vorgesehen.

Die Gelenkwelle 58 ist durch die Hohlräume 35 der beiden Drehteile 23, 25 geführt und treibt das Fahrzeugrad 1 an, wie es bei einem Hinterrad- oder Allradantrieb der Fall ist. Aus Platzgründen sind daher die beiden Stellantriebe 38, 39 (in der Fig. 7 ist lediglich der Stellantrieb 39 gezeigt) nicht mehr innerhalb der Hohlräume 35 angeordnet, sondern außerhalb des Hohlraumes 35 der beiden Drehteile 23, 25 angeordnet. Die beiden Stellantriebe 38, 39 sind gemäß der Fig. 7 dabei über außenumfangsseitig an den Drehteilen 23, 25 vorgesehenen Stirnradstufen 73 in Zahnverbindung.

Im Unterschied zum dritten Ausführungsbeispiel der Fig. 6 ist das Kupplungselement 57 zur Übertragung eines Bremsmomentes vom radseitigen Tragelement 17 zum achsseitigen Tragelement 19 kein Metallbalg, sondern ein Kardangelenk. Das Kardangelenk 57 weist gemäß der Fig. 7 als ein zentrales Gelenkteil einen im Halbschnitt gezeigten Kardanring 63 auf, der sich radial außerhalb um die Drehteile 23, 25 erstreckt und über einen Radialabstand a von den Drehteilen 23, 25 beabstandet ist. Der Kardanring 63 ist jeweils über eine Kardangelenkgabel 77 mit dem radseitigen Tragelement 17 und mit dem achsseitigen Tragelement 19 in Verbindung.

Die beiden Gelenkgabeln 77 weisen jeweils radseitige und achsseitige Stege 65, 66 auf. Die Stege 65, 66 sind einerseits in Festverbindung mit den Tragelementen 17, 19 und andererseits mittels Lagerzapfen 68, die die zueinander rechtwinkligen Drehachsen 67, 69 definieren, am Kardanring 63 angelenkt. Die radseitigen und achsseitigen Stege 65, 66 sind gemäß der Fig. 7 zueinander um einen Winkel von 90° winkelversetzt, und zwar unter Bildung von Freiräumen 71. In diesen Freiräumen 71 kann bevorzugt zumindest teilweise die Getriebestufe 73 und/oder der jeweilige Drehmotor 38, 39 einragen.

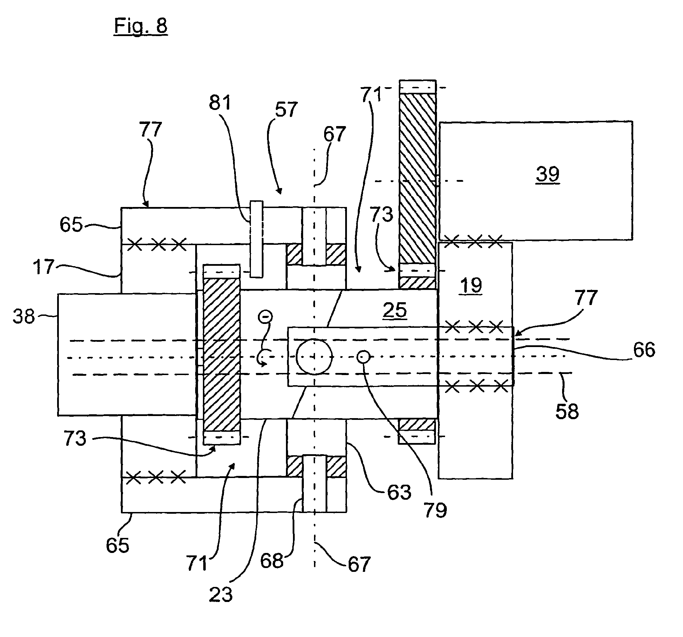

Das in der **Fig. 8** gezeigte Ausführungsbeispiel ist im wesentlichen baugleich mit der in der **Fig. 7** gezeigten Anordnung. Wie in der **Fig. 7,** sind auch in der **Fig. 8** die Stellantriebe 38, 39, insbesondere Elektromotoren, außerhalb der Hohlräume 35 der beiden Drehteile angeordnet. In der **Fig. 8** ist zusätzlich auch der Stellantrieb 38 gezeigt. Dieser ist entsprechend dem Stellantrieb 39 über eine Stirnradstufe 73 in Zahneingriff mit einem äußeren Zahnkranz des Drehteils 23.

Wie aus der **Fig. 8** weiter hervorgeht, sind in den radseitigen und achsseitigen Stegen 65, 66 der Gelenkgabeln 77 jeweils Drehwinkelsensoren 79, 81 vorgesehen. Der Drehwinkelsensor 79 erfasst den Drehwinkel $\beta$, der gemäß Vorbeschreibung den Drehwinkelversatz zwischen dem Drehteil 25 und dem achsseitigen Tragelement 19 beschreibt.

Der Drehwinkelsensor 81 erfasst einen in der **Fig. 8** gezeigten Drehwinkel $\Theta$. Dieser Winkel beschreibt die Verdrehung des Drehteils 23 gegenüber dem Tragelement 17. Der Drehwinkel $\Theta$ des Drehteils 23 wird über den Stellantrieb 38 eingestellt.

Im Unterschied zu den vorangegengangenen Ausführungsbeispielen werden in der **Fig. 8** nicht die Drehwinkel $\alpha$ und $\beta$ zur Regelung der Spur-/Sturzeinstellung verwendet, sondern die Drehwinkel $\beta$ und $\Theta$, die von den Drehwinkelsensoren 79, 81 erfasst werden.

Aus den bei der Regelung relevanten Drehwinkeln $\alpha$, $\beta$ kann anhand von elementar geometrischen Zusammenhängen der Winkel $\Theta$ abgeleitet werden. Prinzipiell ist das System bei einer biegeweichen und verdrehsteifen Koppelung der beiden Tragelemente 17 und 19 durch zwei der drei Winkel $\alpha$, $\beta$, $\Theta$ bestimmt. Daraus lässt sich jede beliebige Stell- und Messkombination der Winkel ableiten, um eine eindeutige Positionierung des Stellglieds 21 zu erreichen.

Alternativ zum obigen Ausführungsbeispiel kann auf das Kupplungselement 57 zwischen den beiden Tragelementen 17, 19 verzichtet werden.

**Patentansprüche**

1. Radaufhängung für Kraftfahrzeuge, mit einem Radträger (3), der ein radseitiges, ein Fahrzeugrad (1) drehbar lagerndes Tragelement (17) und ein achsseitiges Tragelement (19) aufweist, zwischen denen ein Stellglied (21) geschaltet ist, bei dessen Betätigung das radseitige Tragelement (17) zur Einstellung eines Spur- und/oder Sturzwinkels ($\delta$, $\varepsilon$) um einen Schwenkwinkel ($\varphi$) gegenüber dem achsseitigen Tragelement (19) schwenkbar ist, **dadurch gekennzeichnet, dass** das Stellglied (21) ein radseitiges Drehteil (23) und ein achsseitiges Drehteil (25) aufweist, die um ihre Drehachsen (27, 28) zueinander verdrehbar sind, und das radseitige Drehteil (23) beim Verdrehen der beiden Drehteile (23, 25) um den Schwenkwinkel ($\varphi$) gegenüber dem achsseitigen Drehteil (25) auslenkbar ist, wobei die Drehachse (27) des radseitigen Drehteils (23) um einen Neigungswinkel ($\gamma$) gegenüber der Drehachse (28) des achsseitigen Drehteils (25) schräggestellt ist, und die beiden Drehteile (23, 25) über Drehlager (30) und/oder Wälzlager an den jeweiligen Tragelementen (17, 19) drehbar gelagert sind.

2. Radaufhängung nach Anspruch 1, **dadurch gekennzeichnet, dass** das Drehteil (23) mit seiner Mittelachse (29, 29') in einer Taumelbewegung mit veränderlichem Schwenkwinkel ($\varphi$) um die Drehachse (27) drehbar ist.

3. Radaufhängung nach einem der vorhergehenden Ansprüche, **dadurch gekennzeichnet, dass** die beiden Drehteile (23, 25) über Steuerflächen (24, 26) in Anlage, vorzugsweise in Gleitkontakt und/oder Wälzkontakt, sind, die in einer Drehebene (I) liegen, die senkrecht zur Drehachse (27) des radseitigen Drehteils (23) liegt.

4. Radaufhängung nach einem der vorhergehenden Ansprüche, **dadurch gekennzeichnet, dass** durch Drehung des radseitigen Drehteils (23) der Schwenkwinkel ($\varphi$) eingestellt ist, und durch Drehung des achsseitigen Drehteils (25) gegenüber dem achsseitigen Tragelement (19) die räumliche Ausrichtung der aus beiden Drehteilen (23, 25) bestehenden Winkelanordnung festlegbar ist.

5. Radaufhängung nach einem der vorhergehenden Ansprüche, **dadurch gekennzeichnet, dass** die beiden Drehteile (23, 25) mit Hohlräumen (35) ausgebildet sind.

6. Radaufhängung nach einem der vorhergehenden Ansprüche, **dadurch gekennzeichnet, dass** jedem der beiden Drehteile (23, 25) ein Stellantrieb (38, 39), insbesondere ein Drehmotor, zugeordnet ist, der vorzugsweise innerhalb und/oder außerhalb des jeweiligen Drehteils (23, 25) angeordnet ist.

7. Radaufhängung nach Anspruch 6, **dadurch gekennzeichnet, dass** den Stellantrieben (38, 39) der Drehteile (23, 25) eine Steuereinrichtung (49) zugeordnet ist, die auf der Grundlage eines Soll-Spur-/Sturzwinkels ($\varepsilon_{soll}$, $\delta_{soll}$) die Drehwinkel ($\alpha$, $\beta$) festlegt, über die die Drehteile (23, 25) mittels der Stellantriebe (38, 39) zu verstellen sind.

8. Radaufhängung nach Anspruch 7, **dadurch gekennzeichnet, dass** den Drehteilen (23, 25) Winkelgeber (51) zugeordnet sind, die einen Drehwinkel-Ist-Wert ($\alpha_{ist}$, $\beta_{ist}$) der Drehteile (23, 25) erfassen und an die Steuereinrichtung rückführen.

9. Radaufhängung nach einem der vorhergehenden Ansprüche, **dadurch gekennzeichnet, dass** die beiden Drehteile (23, 25) in Axialrichtung ineinander verschachtelt angeordnet sind, wobei insbesondere das achsseitige Drehteil (25) in einem Hohlraum (35) des radseitigen Drehteils (23) angeordnet ist.

10. Radaufhängung nach einem der vorhergehenden Ansprüche, **dadurch gekennzeichnet, dass** zumindest eines der beiden Tragelemente (17, 19) als ein Hohlprofilteil einen Montageraum (55) begrenzt, in dem zumindest teilweise die beiden Drehteile (23, 25) angeordnet sind.

11. Radaufhängung nach einem der vorhergehenden Ansprüche, **dadurch gekennzeichnet, dass** zwischen dem radseitigen Tragelement (17) und dem achsseitigen Tragelement (19) ein vorzugsweise außerhalb der Drehteile (23, 25) vorgesehenes Kupplungselement (57) geschaltet ist.

12. Radaufhängung nach Anspruch 11, **dadurch gekennzeichnet, dass** mit dem Kupplungselement (57) ein Drehmoment, etwa ein Bremsmoment, vom radseitigen Tragelement (17) auf das achsseitige Tragelement (19) übertragbar ist.

13. Radaufhängung nach Anspruch 11 oder 12, **dadurch gekennzeichnet, dass** das Kupplungselement (57) funktionell vom Stellglied (21) bzw. den Drehteilen (23, 25) entkoppelt ist, und/oder über einen freien Abstand (a) vom Stellglied (21) beabstandet ist.

14. Radaufhängung nach Anspruch 11, 12 oder 13, **dadurch gekennzeichnet, dass** das Kupplungselement (57) verdrehsteif bzw. torsionssteif ist, und die Auslenkung des radseitigen Drehteils (23) um den Schwenkwinkel ($\varphi$) gegenüber dem achsseitigen Drehteil (25) zulässt.

15. Radaufhängung nach einem der Ansprüche 11 bis 14, **dadurch gekennzeichnet, dass** das Kupplungselement (57) ein Metallbalg ist, der bevorzugt am radseitigen und am achsseitigen Tragelement (17, 19) montiert ist.

16. Radaufhängung nach Anspruch 15, **dadurch gekennzeichnet, dass** in einem vom Metallbalg (57) begrenzten Montageraum (59) die Drehteile (23, 25) angeordnet sind.

17. Radaufhängung nach einem der Ansprüche 11 bis 14, **dadurch gekennzeichnet, dass** das Kupplungselement (57) ein Kardangelenk ist.

**18.** Radaufhängung nach Anspruch 17, **dadurch gekennzeichnet, dass** das Kardangelenk (57) ein, bevorzugt radial außerhalb der Drehteile (23, 25) angeordnetes Grundelement (63), etwa ein Ringelement, und mit den Tragelementen (17, 19) verbundene radseitige und achsseitige Stege (65, 66) aufweist, die über Drehachsen (67, 69) gelenkig am Grundelement (63) angelenkt sind.

**19.** Radaufhängung nach Anspruch 18, **dadurch gekennzeichnet, dass** die radseitigen Stege (65) und die achsseitigen Stege (66) unter Bildung von Freiräumen (71) zueinander winkelversetzt sind.

**20.** Radaufhängung nach einem der vorhergehenden Ansprüche, **dadurch gekennzeichnet, dass** zumindest eine Drehwinkelsensoreinrichtung (79, 81) vorgesehen ist, die einen Drehwinkel ($\alpha$) zwischen dem radseitigen Drehteil (23) und dem achsseitigen Drehteil (25), einen Drehwinkel ($\beta$) zwischen dem achsseitigen Drehteil (25) und dem achsseitigen Tragelement (19) und/oder einen Drehwinkel ($\Theta$) zwischen dem radseitigen Drehteil (23) und dem radseitigen Tragelement (17) erfasst, und an die Steuereinrichtung (49) leitet.

**21.** Radaufhängung nach Anspruch 20, **dadurch gekennzeichnet, dass** die Drehwinkelsensoreinrichtung (79, 81) zumindest zwei der Drehwinkel ($\alpha$, $\beta$, $\Theta$) erfasst, und die Steuereinrichtung (49) aus den beiden erfassten Drehwinkel ($\alpha$, $\beta$, $\Theta$) jede beliebige Stell- und Meßkombination der Drehwinkel ($\alpha$, $\beta$, $\Theta$) ableitet, um eine eindeutige Positionierung des Stellglieds (21) zu erreichen.

**22.** Radaufhängung nach einem der Ansprüche 20 und 21, **dadurch gekennzeichnet, dass** bei Weglassung des Kupplungselements (57) und insbesondere bei Integrieren eines Radlagers im radseitigen Drehteil (23) die Drehwinkelsensoreinrichtung (79, 81) die Drehwinkel ($\alpha$, $\beta$) zur eindeutigen Positionierung des Stellglieds (21) erfasst.

**23.** Radaufhängung nach einem der Ansprüche 6 bis 8, **dadurch gekennzeichnet, dass** jedes der Drehteile (23, 25) außenumfangseitig mit einer Getriebestufe (73) vorgesehen ist, die, insbesondere über die Freiräume (71) zum jeweils zugeordneten Stellantrieb (38, 39) führt.

**24.** Radaufhängung nach einem der Ansprüche 17 bis 19, **dadurch gekennzeichnet, dass** die Mitte des Kardangelenks (57) auf Höhe des Momentenpols des Radträgers (3) liegt.

**25.** Radaufhängung nach einem der Ansprüche 6 bis 8, **dadurch gekennzeichnet, dass** die Stellantriebe (38, 39) am jeweiligen Tragelement (17, 19) montiert sind.

**26.** Radaufhängung nach Anspruch 5, **dadurch gekennzeichnet, dass** durch die Hohlräume (35) der Drehteile (23, 25) eine Gelenkwelle (58) zum Antrieb eines Fahrzeugrades geführt ist.

**27.** Verfahren zur Bestimmung von Drehwinkeln ($\alpha$, $\beta$) der Drehteile (23, 25) einer Radaufhängung nach einem der Ansprüche 7, 8 und 20-22 bei dem auf der Grundlage eines benötigten Spur- und Sturzwinkels ($\delta$, $\varepsilon$) über einen Bewegungsalgorithmus die Drehwinkel ($\alpha$, $\beta$) berechnet werden.

**28.** Verfahren nach Anspruch 27, **dadurch gekennzeichnet, dass** aus den Drehwinkeln ($\alpha$, $\beta$) der Drehteile (23, 25) zunächst die Koordinaten (x, y, z) des stirnseitigen Mittelpunktes (M) des Drehteils (23) mit folgenden Gleichungen berechnet werden (Vorwärtsrechnung):

$$x = -r \cdot \cos\vartheta \cdot [\cos\beta \cdot \sin\vartheta \cdot (1 - \cos\alpha) + \sin\alpha \cdot \sin\beta] \qquad (1)$$

$$y = r \cdot (\sin^2\vartheta + \cos^2\vartheta \cdot \cos\alpha) \qquad (2)$$

$$z = r \cdot \cos\vartheta \cdot [\sin\beta \cdot \sin\vartheta \cdot (1 - \cos\alpha) - \sin\alpha \cdot \cos\beta] \qquad (3)$$

wobei $\vartheta$ = 90° - $\gamma$

**29.** Verfahren nach Anspruch 28, **dadurch gekennzeichnet, dass** aus den Gleichungen (1), (2) und (3) mittels Rückwärtsrechnung wie folgt die Drehwinkel ($\alpha$, $\beta$) bestimmt werden:

$$\alpha = \pm\arccos \frac{y - r \cdot \sin^2\vartheta}{r \cdot \cos^2\vartheta}$$

$$\beta = \pm\arccos \frac{[-\cos\vartheta \cdot \sin\vartheta \cdot (1 - \cos\alpha)] \cdot x + (-\cos\vartheta \cdot \sin\alpha \cdot z)}{\sqrt{x^2 + z^2} \cdot \sqrt{[-\cos\vartheta \cdot \sin\vartheta \cdot (1 - \cos\alpha)]^2 + (-\cos\vartheta \cdot \sin\alpha)^2}}$$

mit

$$x = -r \cdot \cos(\varepsilon) \cdot \sin(\delta)$$

$$y = r \cdot \cos(\varepsilon) \cdot \cos(\delta)$$

$$z = r \cdot \sin(\varepsilon)$$

und

r = Abstand zwischen stirnseitigen, auf der Mittelachse 29 des Drehteils (23) liegenden Punkten B und C.

**30.** Verfahren nach Anspruch 29, **dadurch gekennzeichnet, dass** zur Überprüfung der vier möglichen Lösungskombinationen für die Drehwinkel ($\alpha$, $\beta$) in Vorwärtsrechnung die x-, y- und z-Koordinaten berechnet und mit den x-, y- und z-Koordinaten der Rückwärtsrechnung verglichen werden, und daraus die beiden gültigen Lösungskombinationen für die Drehwinkel ($\alpha$, $\beta$) bestimmt werden.

**31.** Verfahren nach Anspruch 30, **dadurch gekennzeichnet, dass** die Drehwinkel ($\alpha$, $\beta$) der beiden gültigen Lösungskombinationen für die Drehwinkel ($\alpha$, $\beta$) mit den aktuell eingestellten Werten verglichen wird und die Kombination ausgewählt wird, bei der die Differenz zwischen aktuellem Wert und Lösung geringer ist.

**Claims**

**1.** Wheel suspension system for motor vehicles, having a wheel carrier (3) which comprises a wheel-side carrier element (17) rotationally supporting a vehicle wheel (1), and an axle-side carrier element (19), between which is connected an actuating element (21) which when operated enables the wheel-side carrier element (17) to adjust a tracking and/or hitch angle ($\delta$, $\varepsilon$) about a pivot angle ($\varphi$) relative to the axle-side carrier element (19), **characterised in that** the actuating element (21) comprises a wheel-side rotary element (23) and an axle-side rotary element (25) which are rotatable relative to one another about their rotation axes (27, 28), and the wheel-side rotary element (23) is deflectable when the two rotary elements (23, 25) are rotated about the pivot angle ($\varphi$) relative to the axle-side carrier element (25), the rotation axis (27) of the wheel-side rotary element (23) being inclined by an angle of inclination ($\gamma$) relative to the rotation axis (28) of the axle-side rotary element (25), and the two rotary elements (23, 25) are rotatably mounted by means of rotary bearings (30) and/or roller bearings on the respective carrier elements (17, 19).

**2.** Wheel suspension system according to claim 1, **characterised in that** the rotary element (23) is rotatable with its central axis (29, 29') in a tumbling motion with a variable pivot angle ($\varphi$) about the rotation axis (27).

3. Wheel suspension system according to one of the preceding claims, **characterised in that** the two rotary elements (23, 25) are in abutment with one another, preferably in sliding contact and/or rolling contact, through control surfaces (24, 26) that are located in a plane of rotation (I) situated perpendicularly to the rotation axis (27) of the wheel-side rotary element (23).

4. Wheel suspension system according to one of the preceding claims, **characterised in that** by rotation of the wheel-side rotary element (23) the pivot angle ($\varphi$) is set, and by rotation of the axle-side rotary element (25) relative to the axle-side carrier element (19) the spatial alignment of the angle arrangement consisting of two rotary elements (23, 25) can be fixed.

5. Wheel suspension system according to one of the preceding claims, **characterised in that** the two rotary elements (23, 25) are formed with hollow spaces (35).

6. Wheel suspension system according to one of the preceding claims, **characterised in that** each of the two rotary elements (23, 25) has an associated actuating drive (38, 39), particularly a rotation motor, which is preferably arranged inside and/or outside the respective rotary element (23, 25).

7. Wheel suspension system according to claim 6, **characterised in that** the actuating drives (38, 39) of the rotary elements (23, 25) have an associated control device (49) which, on the basis of a desired tracking/hitch angle ($\varepsilon_{desired}$, $\delta_{desired}$), fixes the rotation angles ($\alpha$, $\beta$) through which the rotary elements (23, 25) are to be adjusted by means of the actuating drives (38, 39).

8. Wheel suspension system according to claim 7, **characterised in that** the rotary elements (23, 25) have associated angle transmitters (51) which detect an actual rotation angle value ($\alpha_{actual}$, $\beta_{actual}$) of the rotary elements (23, 25) and feed it back to the control device.

9. Wheel suspension system according to one of the preceding claims, **characterised in that** the two rotary elements (23, 25) are fitted one inside the other in the axial direction, the axle-side rotary element (25) in particular being arranged in a cavity (35) within the wheel-side rotary element (23).

10. Wheel suspension system according to one of the preceding claims, **characterised in that** at least one of the two carrier elements (17, 19) defines, as a hollow profile part, a mounting space (55) in which the two rotary elements (23, 25) are at least partially arranged.

11. Wheel suspension system according to one of the preceding claims, **characterised in that** a coupling element (57) preferably provided outside the rotary elements (23, 25) is connected between the wheel-side carrier element (17) and the axle-side carrier element (19).

12. Wheel suspension system according to claim 11, **characterised in that** a torque, such as a braking torque, can be transmitted by the coupling element (57) from the wheel-side carrier element (17) to the axle-side carrier element (19).

13. Wheel suspension system according to claim 11 or 12, **characterised in that** the coupling element (57) is functionally uncoupled from the actuating element (21) or the rotary elements (23, 25), and/or is spaced from the actuating element (21) by a free spacing (a).

14. Wheel suspension system according to claim 11, 12 or 13, **characterised in that** the coupling element (57) has torsional stiffness or torsional rigidity, and allows the deflection of the wheel-side rotary element (23) about the pivot angle ($\varphi$) relative to the axle-side rotary element (25).

15. Wheel suspension system according to one of claims 11 to 14, **characterised in that** the coupling element (57) is a metal bellows which is preferably mounted on the wheel-side and axle-side carrier elements (17, 19).

16. Wheel suspension system according to claim 15, **characterised in that** the rotary elements (23, 25) are arranged in a mounting space (59) delimited by the metal bellows (57).

17. Wheel suspension system according to one of claims 11 to 14, **characterised in that** the coupling element (57) is a cardan joint.

18. Wheel suspension system according to claim 17, **characterised in that** the cardan joint (57) comprises a base element (63), such as a ring element, preferably arranged radially outside the rotary elements (23, 25), and wheel-side and axle-side bars (65, 66) connected to the carrier elements (17, 19), said bars (65, 66) being connected to the base element (63) so as to articulate about rotation axes (67, 69).

19. Wheel suspension system according to claim 18, **characterised in that** the wheel-side bars (65) and the axle-side bars (66) are angularly offset from one another, forming clearances (71).

20. Wheel suspension system according to one of the preceding claims, **characterised in that** at least one rotation angle sensing device (79, 81) is provided which detects a rotation angle ($\alpha$) between the wheel-side rotary element (23) and the axle-side rotary element (25), a rotation angle ($\beta$) between the axle-side rotary element (25) and the axle-side carrier element (19) and/or a rotation angle ($\Theta$) between the wheel-side rotary element (23) and the wheel-side carrier element (17), and transmits it to the control device (49).

21. Wheel suspension system according to claim 20, **characterised in that** the rotation angle sensing device (79, 81) detects at least two of the rotation angles ($\alpha$, $\beta$, $\Theta$), and, from the two rotation angles ($\alpha$, $\beta$, $\Theta$) detected, the control device (49) derives any desired actuating and measuring combination of the rotation angles ($\alpha$, $\beta$, $\Theta$), in order to achieve clear positioning of the actuating element (21).

22. Wheel suspension system according to one of claims 20 and 21, **characterised in that** when the coupling element (57) is omitted and in particular when a wheel bearing is integrated in the wheel-side rotary element (23), the rotation angle sensing device (79, 81) detects the rotation angles ($\alpha$, $\beta$) for clear positioning of the actuating element (21).

23. Wheel suspension system according to one of claims 6 to 8, **characterised in that** each of the rotary elements (23, 25) is provided on the outer circumferential side with a gear stage (73) which leads to the particular associated actuating drive (38, 39), particularly via the clearances (71).

24. Wheel suspension system according to one of claims 17 to 19, **characterised in that** the centre of the cardan joint (57) is located at the height of the instantaneous centre of rotation of the wheel carrier (3).

25. Wheel suspension system according to one of claims 6 to 8, **characterised in that** the actuating drives (38, 39) are mounted on the respective carrier element (17, 19).

26. Wheel suspension system according to claim 5, **characterised in that** a cardan shaft (58) for driving a vehicle wheel is passed through the cavities (35) in the rotary elements (23, 25).

27. Method of determining rotation angles ($\alpha$, $\beta$) of the rotary elements (23, 25) of a wheel suspension system according to one of claims 7; 8 and 20-22, wherein the rotation angles ($\alpha$, $\beta$) are calculated on the basis of a required tracking and hitch angle ($\delta$, $\varepsilon$) by means of a motion algorithm.

28. Method according to claim 27, **characterised in that** first of all the coordinates (x, y, z) of the centre point (M) on the face of the rotary element (23) are calculated from the rotation angles ($\alpha$, $\beta$) of the rotary elements (23, 25) using the following equations (forward calculation):

$$x = -r \cdot \cos\vartheta \cdot [\cos\beta \cdot \sin\vartheta \cdot (1 - \cos\alpha) + \sin\alpha \cdot \sin\beta] \qquad (1)$$

$$y = r \cdot (\sin^2\vartheta + \cos^2\vartheta \cdot \cos\alpha) \qquad (2)$$

$$z = r \cdot \cos\vartheta \cdot [\sin\beta \cdot \sin\vartheta \cdot (1 - \cos\alpha) - \sin\alpha \cdot \cos\beta] \qquad (3)$$

where
$\vartheta = 90° - \gamma$

29. Method according to claim 28, **characterised in that** the rotation angles $(\alpha, \beta)$ are determined from equations (1), (2) and (3) by reverse calculation as follows:

$$\alpha = \pm arccos \frac{y - r \cdot sin^2\vartheta}{r \cdot cos^2\vartheta}$$

$$\beta = \pm arccos \frac{[-cos\vartheta \cdot sin\vartheta \cdot (1 - cos\alpha)] \cdot x + (-cos\vartheta \cdot sin\alpha \cdot z)}{\sqrt{x^2 + z^2} \cdot \sqrt{[-cos\vartheta \cdot sin\vartheta \cdot (1 - cos\alpha)]^2 + (-cos\vartheta \cdot sin\alpha)^2}}$$

where

$$x = -r \cdot cos(\varepsilon) \cdot sin(\delta)$$

$$y = r \cdot cos(\varepsilon) \cdot cos(\delta)$$

$$z = r \cdot sin(\varepsilon)$$

and
$r$ = distance between points B and C located on the end face on the central axis 29 of the rotary element (23).

30. Method according to claim 29, **characterised in that** for checking the four possible solution combinations for the rotation angles $(\alpha, \beta)$ in forward calculation the x, y and z coordinates are calculated and compared with the x, y and z coordinates of the reverse calculation, and from this the two valid combinations for the rotation angles $(\alpha, \beta)$ are determined.

31. Method according to claim 30, **characterised in that** the rotation angles $(\alpha, \beta)$ of the two valid solution combinations for the rotation angles $(\alpha, \beta)$ are compared with the values currently set and the combination in which the difference between the current value and the solution is smaller is selected.

**Revendications**

1. Suspension de roue pour véhicules automobiles, comprenant un support de roue (3), qui présente un élément porteur côté roue (17), logeant de manière à pouvoir tourner une roue de véhicule (1) et un élément porteur côté essieu (19), entre lesquels est installé un organe de réglage (21), lors de l'actionnement duquel l'élément porteur côté roue (17) peut être pivoté selon un angle de pivotement $(\varphi)$ par rapport à l'élément porteur côté essieu (19) aux fins du réglage d'un angle de pincement et/ou de carrossage $(\delta, \varepsilon)$, **caractérisée en ce que** l'organe de réglage (21) présente une partie rotative côté roue (23) et une partie rotative côté essieu (25), lesquelles peuvent être tournées l'une par rapport à l'autre autour de leurs axes de rotation (27, 28), et **en ce que** la partie rotative côté roue (23) peut être déviée, lors de la rotation des deux parties rotatives (23, 25) selon l'angle de pivotement $(\varphi)$ par rapport à la partie rotative côté essieu (25), l'axe de rotation (27) de la partie rotative côté roue (23) étant placé en biais selon un angle d'inclinaison ($\gamma$) par rapport à l'axe de rotation (28) de la partie rotative côté essieu (25), et **en ce que** les deux parties rotatives (23, 25) sont logées de manière à pouvoir tourner au niveau des éléments porteurs (17, 19) respectifs par l'intermédiaire de paliers de rotation (30) et/ou de paliers de roulement.

2. Suspension de roue selon la revendication 1, **caractérisée en ce que** la partie rotative (23) peut être tournée autour de l'axe de rotation (27) avec son axe médian (29, 29') en un mouvement de nutation avec un angle de pivotement ($\varphi$) variable.

3. Suspension de roue selon l'une quelconque des revendications précédentes, **caractérisée en ce que** les deux parties rotatives (23, 25) sont en appui, de préférence en contact par glissement et/ou en contact par roulement par l'intermédiaire de surfaces de commande (24, 26) se trouvant dans un plan de rotation (I), qui est situé de manière perpendiculaire par rapport à l'axe de rotation (27) de la partie rotative côté roue (23).

4. Suspension de roue selon l'une quelconque des revendications précédentes, **caractérisée en ce que** l'angle de pivotement ($\varphi$) est réglé par la rotation de la partie rotative côté roue (23), et **en ce que** l'orientation spatiale de l'agencement angulaire constituée des deux parties rotatives (23, 25) peut être déterminée par la rotation de la partie rotative côté essieu (25) par rapport à l'élément porteur côté essieu (19).

5. Suspension de roue selon l'une quelconque des revendications précédentes, **caractérisée en ce que** les deux parties rotatives (23, 25) sont réalisées avec des cavités (35).

6. Suspension de roue selon l'une quelconque des revendications précédentes, **caractérisées en ce qu'**un entraînement de réglage (38, 39), en particulier un moteur rotatif, est associé à chacune des deux parties rotatives (23, 25), lequel est de préférence disposé à l'intérieur et/ou à l'extérieur de la partie rotative respective (23, 25).

7. Suspension de roue selon la revendication 6, **caractérisée en ce qu'**est associé aux entraînements de réglage (38, 39) des parties rotatives (23, 25) un dispositif de commande (49), qui détermine, sur la base d'un angle de pincement/de carrossage théorique ($\varepsilon_{\text{théorique}}$, $\delta_{\text{théorique}}$), les angles de rotation ($\alpha$, ß), selon lesquels les parties rotatives (23, 25) sont à déplacer au moyen des entraînements de réglage (38, 39).

8. Suspension de roue selon la revendication 7, **caractérisée en ce que** sont associés aux parties rotatives (23, 25) des capteurs d'angle (51), qui détectent une valeur réelle d'angle de rotation ($\alpha_{\text{réelle}}$, ß$_{\text{réelle}}$) des parties rotatives (23, 25) et la transmettent au dispositif de commande.

9. Suspension de roue selon l'une quelconque des revendications précédentes, **caractérisée en ce que** les deux parties rotatives (23, 25) sont disposées de manière imbriquée l'une dans l'autre dans la direction axiale, la partie rotative côté essieu (25) étant en particulier disposée dans une cavité (35) de la partie rotative côté roue (23).

10. Suspension de roue selon l'une quelconque des revendications précédentes, **caractérisée en ce qu'**au moins un des deux éléments porteurs (17, 19) délimite comme une partie profilée creuse un espace de montage (55), dans lequel les deux parties rotatives (23, 25) sont disposées au moins en partie.

11. Suspension de roue selon l'une quelconque des revendications précédentes, **caractérisée en ce qu'**un élément de couplage (57) prévu de préférence à l'extérieur des parties rotatives (23, 25) est installé entre l'élément porteur côté roue (17) et l'élément porteur côté essieu (19).

12. Suspension de roue selon la revendication 11, **caractérisée en ce qu'**un couple de rotation, ou un couple de freinage, peut être transmis à l'aide de l'élément de couplage (57) de l'élément porteur côté roue (17) à l'élément porteur côté essieu (19).

13. Suspension de roue selon la revendication 11 ou 12, **caractérisée en ce que** l'élément de couplage (57) est découplé de manière fonctionnelle de l'organe de réglage (21) ou des parties rotatives (23, 25), et/ou est espacé de l'organe de réglage (21) d'une distance (a) libre.

14. Suspension de roue selon la revendication 11, 12 ou 13, **caractérisée en ce que** l'élément de couplage (57) est rigide en rotation ou en torsion, et autorise la déviation de la partie rotative côté roue (23) selon l'angle de pivotement ($\varphi$) par rapport à la partie rotative côté essieu (25).

**15.** Suspension de roue selon l'une quelconque des revendications 11 à 14, **caractérisée en ce que** l'élément de couplage (57) est un soufflet métallique, qui est monté de préférence au niveau de l'élément porteur côté roue et au niveau de l'élément porteur côté essieu (17, 19).

**16.** Suspension de roue selon la revendication 15, **caractérisée en ce que** les parties rotatives (23, 25) sont disposées dans un espace de montage (59) délimité par le soufflet métallique (57).

**17.** Suspension de roue selon l'une quelconque des revendications 11 à 14, **caractérisée en ce que** l'élément de couplage (57) est un joint de cardan.

**18.** Suspension de roue selon la revendication 17, **caractérisée en ce que** le joint de cardan (57) présente un élément de base (63) disposé de préférence de manière radiale à l'extérieur des parties rotatives (23, 25), ou un élément annulaire, et des entretoises (65, 66) côté roue et côté essieu reliées aux éléments porteurs (17, 19), lesquelles sont articulées au niveau de l'élément de base (63) par l'intermédiaire d'axes de rotation (67, 69).

**19.** Suspension de roue selon la revendication 18, **caractérisée en ce que** les entretoises côté roue (65) et les entretoises côté essieu (66) sont décalées les unes par rapport aux autres de manière angulaire en formant des espaces libres (71).

**20.** Suspension de roue selon l'une quelconque des revendications précédentes, **caractérisée en ce qu'**au moins un dispositif de détection d'angle de rotation (79, 81) est prévu, lequel détecte un angle de rotation ($\alpha$) entre la partie rotative côté roue (23) et la partie rotative côté essieu (25), un angle de rotation (ß) entre la partie rotative côté essieu (25) et l'élément porteur côté essieu (19) et/ou un angle de rotation ($\theta$) entre la partie rotative côté roue (23) et l'élément porteur côté roue (17), et transfère ce dernier au dispositif de commande (49).

**21.** Suspension de roue selon la revendication 20, **caractérisée en ce que** le dispositif de détection d'angle de rotation (79, 81) détecte au moins deux des angles de rotation ($\alpha$, ß, $\theta$), et **en ce que** le dispositif de commande (49) déduit des deux angles de rotation ($\alpha$, ß, $\theta$) détectés chaque combinaison de réglage et de mesure au choix des angles de rotation ($\alpha$, ß, $\theta$) afin d'atteindre un positionnement clair de l'organe de réglage (21).

**22.** Roue de suspension selon l'une quelconque des revendications 20 et 21, **caractérisée en ce que** le dispositif de détection d'angle de rotation (79, 81) détecte les angles de rotation ($\alpha$, ß) aux fins du positionnement clair de l'organe de réglage (21) en supprimant l'élément de couplage (57) et en intégrant en particulier un palier de roue dans la partie rotative côté roue (23).

**23.** Suspension de roue selon l'une quelconque des revendications 6 à 8, **caractérisée en ce que** chaque partie rotative (23, 25) est prévue côté périphérie extérieure avec un étage de transmission (73), qui mène en particulier par les espaces libres (71) à l'entraînement de réglage (38, 39) respectivement associé.

**24.** Suspension de roue selon l'une quelconque des revendications 17 à 19, **caractérisée en ce que** le centre du joint de cardan (57) se trouve à hauteur du pôle momentané du support de roue (3).

**25.** Suspension de roue selon l'une quelconque des revendications 6 à 8, **caractérisée en ce que** les entraînements de réglage (38, 39) sont montés au niveau de l'élément porteur (17, 19) respectif.

**26.** Suspension de roue selon la revendication 5, **caractérisée en ce qu'**un arbre articulé (58) servant à l'entraînement d'une roue de véhicule est guidé à travers les cavités (35) des parties rotatives (23, 25).

**27.** Procédé servant à déterminer des angles de rotation ($\alpha$, ß) des parties rotatives (23, 25) d'une suspension de roue selon l'une quelconque des revendications 7, 8 et 20 à 22, où les angles de rotation ($\alpha$, ß) sont calculés sur la base d'un angle de pincement et de carrossage ($\delta$, $\varepsilon$) requis par un algorithme de déplacement.

**28.** Procédé selon la revendication 27, **caractérisé en ce qu'**en premier lieu les coordonnées (x, y, z) du point central (M) côté frontal de la partie rotative (23) sont calculées à partir des angles de rotation ($\alpha$, ß) des parties rotatives (23, 25) à l'aide des équations qui suivent (calcul effectué en amont) :

$$x = -r \cdot \cos\vartheta \cdot [\cos\beta \cdot \sin\vartheta \cdot (1 - \cos\alpha) + \sin\alpha \cdot \sin\beta] \qquad (1)$$

$$y = r \cdot (\sin^2\vartheta + \cos^2\vartheta \cdot \cos\alpha) \qquad (2)$$

$$z = r \cdot \cos\vartheta \cdot [\sin\beta \cdot \sin\vartheta \cdot (1 - \cos\alpha) - \sin\alpha \cdot \cos\beta] \qquad (3)$$

où $\vartheta = 90° - \gamma$
ou

**29.** Procédé selon la revendication 28, **caractérisé en ce que** les angles de rotation ($\alpha$, ß') sont déterminés à partir des équations (1), (2) et (3) au moyen d'un calcul effectué en aval comme suit :

$$\alpha = \pm\arccos\frac{y - r \cdot \sin^2\vartheta}{r \cdot \cos^2\vartheta}$$

$$\beta = \pm\arccos\frac{[-\cos\vartheta \cdot \sin\vartheta \cdot (1 - \cos\alpha)] \cdot x + (-\cos\vartheta \cdot \sin\alpha \cdot z)}{\sqrt{x^2 + z^2} \cdot \sqrt{[-\cos\vartheta \cdot \sin\vartheta \cdot (1 - \cos\alpha)]^2 + (-\cos\vartheta \cdot \sin\alpha)^2}}$$

avec

$$x = -r \cdot \cos(\varepsilon) \cdot \sin(\delta)$$

$$y = r \cdot \cos(\varepsilon) \cdot \cos(\delta)$$

$$z = r \cdot \sin(\varepsilon)$$

et
r = distance entre des points B et C situés côté frontal, sur l'axe médian (29) de la partie rotative (23).

**30.** Procédé selon la revendication 29, **caractérisé en ce qu'**aux fins de la vérification des quatre possibles combinaisons de solution pour les angles de rotation ($\alpha$, ß), on calcule avec le calcul effectué en amont les coordonnées x, y et z qu'on compare aux coordonnées x, y et z du calcul effectué en aval, et **en ce qu'**on en détermine les deux combinaisons de solution valables pour les angles de rotation ($\alpha$, ß).

**31.** Procédé selon la revendication 30, **caractérisé en ce que** les angles de rotation ($\alpha$, ß) des deux combinaisons de solution valables pour les angles de rotation ($\alpha$, $\beta$) sont comparés aux valeurs réglées pour le moment, et **en ce qu'**on sélectionne la combinaison, où la différence entre la valeur du moment et la solution est la plus faible.

## Fig. 1

Fig. 2

Fig. 3

Fig. 4

**Fig. 5**

Fig. 6

Fig. 7

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3928135 A1

- WO 9816418 A